# EUROPEAN PATENT APPLICATION

(11) **EP 4 567 319 A1**
(43) Date of publication of application: **11.06.2025**
(21) Application number: 23849908.1
(22) Date of filing: 20.07.2023
(51) Int. Cl.: F17C 1/00, F02C 6/16, F17C 13/00

(54) **COMPRESSED AIR STORAGE CONTAINER, AND COMPRESSED AIR STORAGE DEVICE INCLUDING SAID COMPRESSED AIR STORAGE CONTAINER**

(30) Priority: 01.08.2022 JP 2022122615
(71) Applicant: Toyo Engineering Corporation, Chiba-shi, Chiba 261-8601 (JP)
(72) Inventor: SAKAI, Kenji, Chiba-shi, Chiba 261-8601 (JP); YAGO, Katsunori, Chiba-shi, Chiba 261-8601 (JP); OKAJIMA, Satoshi, Chiba-shi, Chiba 261-8601 (JP); TOMINAGA, Kenichi, Chiba-shi, Chiba 261-8601 (JP)
(74) Representative: Gille Hrabal Partnerschaftsgesellschaft mbB Patentanwälte
(86) International application number: PCT/JP2023/026557
(87) International publication number: WO 2024/029353

(57) **Abstract**

The present invention provides a compressed air storage container that stores compressed air. The compressed air storage container of the present invention includes a vertically disposed cylindrical container closed at both ends and a cylindrical separation film, wherein the cylindrical container includes a cylindrical side part, a top part closing an upper end of the cylindrical side part, and a bottom part closing a lower end of the cylindrical side part, includes a supply/discharge port for a first gas on the top part side, and includes a discharge/supply port for a second gas on the bottom part side, the cylindrical separation film is hung from the top part of the cylindrical container with an opening at an upper end thereof being squeezed and hermetically sealed, an opening at a lower end of the cylindrical separation film is open against the bottom part, and a circumferential portion of the opening at the lower end is fixed such that it is sealingly attached to the bottom part or the side part close to the bottom part, and an internal space surrounded by an inner surface of the cylindrical separation film and the bottom part of the cylindrical container is separated from an external space surrounded by the cylindrical container, an outer surface of the cylindrical separation film, and the top part of the cylindrical container with the movement of gas between each other being shut.

## Description

### Field of the Invention

The present invention relates to a compressed air storage container and a compressed air storage apparatus including the compressed air storage container, a method of using compressed air, and a power generation apparatus and a power generation method using a compressed air storage apparatus.

### Background of the Invention

Conventionally, the technology of storing and utilizing compressed air energy in enormous underground space after rock salt mining (Compressed Air Energy Storage: CAES) has been known, and the stored compressed air energy has been utilized for power generation or the like.

EP-B 3255266 describes a hybrid system of an adiabatic CAES system and a diabatic CAES system (Hybrid CAES System) in which heat generated during storage of air is reused during discharge of the air. WO-A 2009/146101 describes a method of using carbon dioxide as cushion gas in a formation such as a porous sandstone layer or the like located at a great depth to store a greater amount of air by taking advantage of the fact that the volume of carbon dioxide rapidly decreases above the critical pressure. WO-A 2007/096656 describes a technique of liquefying compressed air to reduce storage capacity, whereby a greater amount of air is stored even in a small-scale plant on the ground.

### Summary of the Invention

A problem to be solved by the present invention is to provide a compressed air storage container capable of reducing the capacity of the compressed air storage container, a compressed air storage apparatus including the compressed air storage container, a method of using the compressed air storage apparatus, and a power generation apparatus and a power generation method using the compressed air storage apparatus.

The present invention provides a compressed air storage container including: a vertically disposed cylindrical container closed at both ends; and a cylindrical separation film inside the cylindrical container closed at both ends, wherein the cylindrical container closed at both ends includes a cylindrical side part, a top part closing an upper end of the cylindrical side part, and a bottom part closing a lower end of the cylindrical side part, includes a supply/discharge port for a first gas on the top part side, and includes a discharge/supply port for a second gas on the bottom part side, the cylindrical separation film is hung from the top part of the cylindrical container with an opening at an upper end thereof being squeezed and hermetically sealed, an opening at a lower end of the cylindrical separation film is open against the bottom part, and a circumferential portion of the opening at the lower end is fixed such that it is sealingly attached to the bottom part or the side part close to the bottom part, and an internal space surrounded by an inner surface of the cylindrical separation film and the bottom part of the cylindrical container is separated from an external space surrounded by the cylindrical container, an outer surface of the cylindrical separation film, and the top part of the cylindrical container with the movement of gas between each other being shut by the cylindrical separation film.

The present invention provides a compressed air storage apparatus including the above compressed air storage container, wherein the compressed air storage container is such that, when the first gas is compressed air and the second gas is cushion gas, the supply/discharge port on the top part side of the cylindrical container is connected to a compressed air supply/discharge line, and the discharge/supply port on the bottom part side of the cylindrical container is connected to a cushion gas discharge/supply line, a cushion gas compressor, a heat exchanger that performs cooling/heating of cushion gas, and a storage container for liquefied cushion gas after compression cooling, or when the first gas is cushion gas and the second gas is compressed air, the supply/discharge port on the bottom part side of the cylindrical container is connected to the compressed air supply/discharge line, and the discharge/supply port on the top part side of the cylindrical container is connected to the cushion gas discharge/supply line, the cushion gas compressor, the heat exchanger that performs cooling/heating of cushion gas, and the storage container for liquefied cushion gas after compression cooling. When the compressed air storage container is used in a compressed air storage apparatus, the first gas is compressed air and the second gas is cushion gas or the first gas is cushion gas and the second gas is compressed air.

The present invention provides a method of using the above compressed air storage apparatus, the method of using alternately performing a process of supplying compressed air to the external space (or the internal space) of the cylindrical separation film in the compressed air storage container and discharging cushion gas with which the internal space (or the external space) of the cylindrical separation film in the compressed air storage container is filled, and a process of supplying the cushion gas to the internal space (or the external space) and discharging the compressed air with which the external space (or the internal space) is filled, wherein the method of using includes the following steps when the external space (or the internal space) is used as a compressed air supply space and the internal space (or the external space) is used as a cushion gas supply space: step 1 of starting supply of the compressed air from a compressed air supply line to the external space (or the internal space) with the internal space (or the external space) being filled with the cushion gas when storing the compressed air; step 2 of discharging the cushion gas from the internal space (or the external space) and cooling and storing the discharged cushion gas while continuing the supply of the compressed air to the external space (or the internal space); step 3 of stopping the supply of the compressed air to the external space (or the internal space) and stopping the discharge of the cushion gas from the internal space (or the external space), wherein a change in the amount of the air stored in the compressed air storage container is measured to decide the timing of the stop on the basis of the change in the amount of the stored air; step 4 of discharging the compressed air from a compressed air discharge line and supplying it to a user with the external space (or the internal space) being filled with the compressed air when discharging and using the compressed air; step 5 of supplying the cushion gas stored in the storage container for liquefied cushion gas to the internal space (or the external space) after heating and vaporizing it while continuing the discharge of the compressed air from the external space (or the internal space) and the supply thereof to the user; and step 6 of stopping the supply of the cushion gas to the internal space (or the external space) and stopping the discharge of the compressed air from the external space (or the internal space) and the supply thereof to the user, wherein a change in the amount of the air stored in the compressed air storage container is measured to decide the timing of the stop on the basis of the change in the amount of the stored air.

The present invention provides a power generation apparatus including the above compressed air storage apparatus and a turbine generator, and a power generation method.

The compressed air storage apparatus of the present invention can increase the amount of compressed air that can be stored and also increase the amount of compressed air that can be used because it includes the compressed air storage container which utilizes cushion gas using the cylindrical separation film. In other words, because compressed air in the compressed air storage container is pushed out by cushion gas with the cylindrical separation film interposed therebetween, almost the whole amount of the compressed air in the compressed air storage container can be discharged without reducing the pressure at which the compressed air is discharged. As a result, the amount of power that can be recovered in an expander at a later stage is increased. Further, because the cushion gas and the compressed air are always separated from each other by the cylindrical separation film, the air is unlikely to mix into the cushion gas, and the purity of the cushion gas hardly changes over time. As a result, the effect expected of the cushion gas is stably maintained for a long period.

### Brief Description of Drawings

[FIG. 1] A longitudinal cross-sectional view of the compressed air storage container of the present invention.
[FIG. 2] A partially enlarged cross-sectional view of FIG. 1.
[FIG. 3] A flow diagram of the power generation apparatus including the compressed air storage apparatus of the present invention.
[FIG. 4] An illustration of the method of using the compressed air storage apparatus including the compressed air storage container of the present invention.

### Embodiments of the Invention

### (Compressed air storage container)

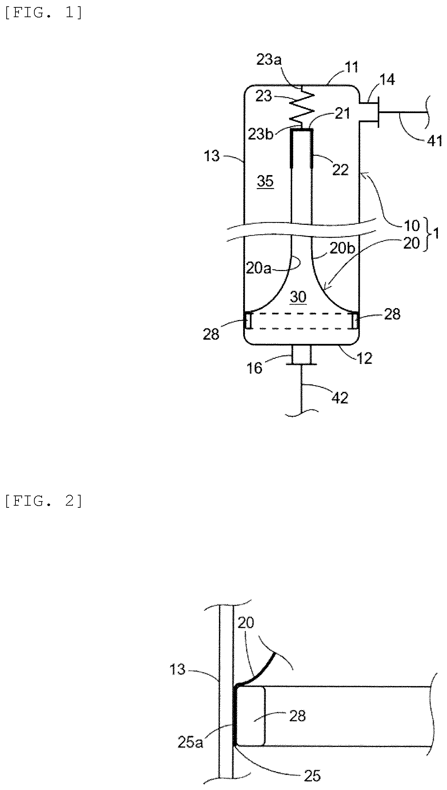

One embodiment of a compressed air storage container 1 of the present invention is explained with reference to FIG. 1. The compressed air storage container 1 includes a cylindrical container 10 closed at both ends (hereinafter simply referred to as "cylindrical container 10") and a cylindrical separation film 20 disposed inside the cylindrical container 10. In the embodiment explained below, an internal space 30 of the cylindrical separation film 20 is a cushion gas supply space, and an external space 35 of the cylindrical separation film 20 is a compressed air supply space (storage space).

The cylindrical container 10 is used as an accumulator and is preferably a pressure-resistant container made of metal such as carbon steel, stainless steel or the like. The horizontal cross-sectional shape of the cylindrical container 10 is preferably a circle, but can also be a desired shape such as an ellipse, a polygon, or the like according to the conditions such as the installation location and others. Dimensions of the cylindrical container 10 can be appropriately set depending on the conditions such as the amount of compressed air required to be stored, the installation location, and others. For example, if the widthwise cross-sectional shape is a circle, a container with a diameter of 0.8 to 2.0 m and a height of 20 to 40 m can be used, but a container larger or smaller than the above dimension ranges can also be used.

The cylindrical container 10 is installed vertically, and includes a cylindrical side part 13, a top part 11 closing an opening at an upper end of the cylindrical side part 13, and a bottom part 12 closing an opening at a lower end of the cylindrical side part 13. A compressed air supply and discharge port 14 is included near the top part 11 or the upper end of the side part 13 and connected to a line 41 that performs supply and discharge of compressed air. While FIG. 1 shows one port for supply and discharge of compressed air, a compressed air supply port and a compressed air discharge port may be independent and separate from each other. A cushion gas discharge and supply port 16 is included in the bottom part 12 and connected to a line 42 that performs supply and discharge of cushion gas. While FIG. 1 shows one port for supply and discharge of cushion gas, a cushion gas supply port and a compressed air discharge port may be independent and separate from each other.

The cylindrical separation film 20 is hung from the top part 11 with a first end opening 21 side situated on the top part 11 side of the cylindrical container 10 being squeezed and hermetically sealed. A method of squeezing and hermetically sealing the first end opening 21 side of the cylindrical separation film 20 is not particularly limited, and for example, a method of squeezing the first end opening 21 side and binding it with a cable tie to make it hermetically sealed, a method of squeezing it likewise and binding it with a rope or the like to make it hermetically sealed, a method of squeezing it likewise and binding it with an adhesive tape to make it hermetically sealed, a method of squeezing it likewise and hermetically sealing it with an adhesive, a method of squeezing and hermetically sealing it using a cap or the like, or a combination of these methods can be used. In FIG. 1, the first end opening 21 side of the cylindrical separation film 20 is squeezed and pushed into a cap 22 and an adhesive is further flowed thereinto to make it hermetically sealed.

The cylindrical separation film 20 is hung from the top part 11 of the cylindrical container 10 with a spring hanger 23. The spring hanger 23 has a first end 23a fixed to the top part 11 and a second end 23b fixed to the first end opening 21 of the cylindrical separation film 20 (the cap 22).

When the compressed air storage container 1 is used in a compressed air storage apparatus 50 including the compressed air storage container 1, a measurement unit selected from the following (including a combination thereof) can be used as a unit that measures the amount of the air stored in the compressed air storage container 1: (i) a flowmeter for measuring changes in the flow rate of the cushion gas discharged from the internal space 30 of the cylindrical separation film 20 or supplied to the internal space 30; (ii) a flowmeter for measuring changes in the flow rate of the compressed air supplied to the external space 35 of the cylindrical separation film 20 or discharged from the external space 35; (iii) a weighing scale such as a load cell or the like for measuring changes in the hanging load applied to the spring hanger 23 with which the cylindrical separation film 20 is hung; and (iv) a displacement meter such as a level meter or the like for measuring changes in the amount of extension of a spring of the spring hanger 23 with which the cylindrical separation film 20 is hung. As one example, a part with which the cylindrical separation film 20 is hung from the top part 11 in the compressed air storage container 1 is the spring hanger 23, and the container 1 is provided with a device capable of measuring the hanging load of the cylindrical separation film acting on the spring hanger 23.

In the cylindrical separation film 20, a second end opening 25 situated on the bottom part 12 side of the cylindrical container 10 is opposite the bottom part 12, and a circumferential portion 25a of the second end opening 25 is sealingly attached and fixed close to a joint between the bottom part 12 and the side part 13 (in FIGS. 1 and 2, it is fixed on the side part 13 side). While the diameter and the length of the cylindrical separation film 20 are adjusted according to the size of the cylindrical container 10, the diameter of the cylindrical separation film 20 is desirably the same as the inner diameter of the cylindrical container 10 or about ±10% of the inner diameter of the cylindrical container 10.

The cylindrical separation film 20 does not have air permeability, and can maintain by its own weight a state of hanging down like a skirt while allowing the circumferential portion 25a of the second end opening 25 to maintain contact with the bottom part 12 or the side part 13 close to the bottom part 12 of the cylindrical container 10 and is sealingly attached to the cylindrical container 10 by a fixing tool when hung from the top part 11 of the cylindrical container 10 with the first end opening 21 side being squeezed and closed. As such a cylindrical separation film 20, one having a mass per unit area of 500 g/m² or more can be used, and one made of a material selected from a film made of a synthetic resin, a rubber-coated fabric, and a combination of these is preferable. The rubber-coated fabric is a sheet obtained by attaching rubber to fabric, and is a composite material having properties of both fabric and rubber. Examples can include a composite sheet produced by attaching rubber rolled with calendar rolls to one or both of the fiber surfaces of a woven fabric or a nonwoven fabric, a composite sheet obtained by sandwiching rubber between fibers, and others.

A method of fixing the second end opening 25 side of the cylindrical separation film 20 is not particularly limited unless smooth movement of the cylindrical separation film 20 is prevented or the cylindrical separation film 20 is brought into contact with a fixing tool and damaged and as long as the circumferential portion 25a of the second end opening 25 of the cylindrical separation film 20 is sealingly attached close to the joint between the bottom part 12 and the side part 13 of the cylindrical container so that hermeticity is maintained, and for example, as shown in FIGS. 1 and 2, an embodiment in which it is fixed with the circumferential portion 25a of the second end opening 25 being held between the side part 13 and a fixing tool 28 in the form of a ring is possible. The fixing tool 28 in the form of a ring may be in the form of a continuous ring or may be in the form of a ring made of an arrangement of a plurality of divided fixing tools. In other words, the circumferential portion 25a of the opening at the lower end of the cylindrical separation film 20 (the second end opening 25) is sealingly attached and fixed to the bottom part 12 or the side part 13 close to the bottom part 12 of the hollow cylindrical container 10 using the fixing tool 28 in the form of a continuous or a discontinuous ring. As a specific fixing method, a method of fixing the circumferential portion 25a of the second end opening 25 such that it is held between the fixing tool 28 in the form of a ring and an inner surface of the side part 13 using a plurality of fasteners such as bolts and nuts not shown (and also using a gasket as necessary), a method of bonding the circumferential portion 25a of the second end opening 25 and the inner surface of the side part 13 (and further the fixing tool 28 in the form of a ring and the circumferential portion 25a of the second end opening 25 as necessary), or further a combination of these methods or the like can be used.

The cushion gas discharge and supply port 16 is connected to the internal space 30 surrounded by an inner surface 20a of the cylindrical separation film 20. The compressed air supply and discharge port 14 is connected to the external space 35 surrounded by the cylindrical container 10 and an outer surface 20b of the cylindrical separation film 20. Because the internal space 30 is separated from the external space 35 with the movement of gas between each other being shut by the cylindrical separation film 20, the cushion gas does not move from the internal space 30 to the external space 35, and the compressed air does not move from the external space 35 to the internal space 30. Note that the movement of gas as minute in amount as it does not affect normal operation is allowed during actual use of the compressed air storage container 1 and the compressed air storage apparatus 50 utilizing the same.

When the compressed air storage container 1 is used in a compressed air storage apparatus, a single first opening 14 is shared between a supply port and a discharge port for compressed air, the first opening 14 is connected to a single line 41, the single line 41 branches into two of a first branch line 51 and a second branch line 53 via a three-way valve 55, the first branch line 51 is a compressed air supply line, and the second branch line 53 is a compressed air discharge line. In place of the three-way valve 55, a shut-off valve may be provided in both the first branch line 51 and the second branch line 53. If a compressed air supply port and a compressed air discharge port are each independently and separately provided in the compressed air storage container 1, the line 41 is unnecessary and the lines 51 and 53 are connected respectively to the compressed air supply port and the compressed air discharge port.

When the compressed air storage container 1 is used in a compressed air storage apparatus, a single second opening 16 is shared between a supply port and a discharge port for cushion gas, the second opening 16 is connected to a single line 42, the single line 42 branches into two of a first branch line 66 and a second branch line 65 via a three-way valve 56, the first branch line 66 is a cushion gas supply line, and the second branch line 65 is a cushion gas discharge line. In place of the three-way valve 56, a shut-off valve may be provided in both the first branch line 66 and the second branch line 65. If a cushion gas supply port and a cushion gas discharge port are each independently and separately provided in the compressed air storage container 1, the line 42 is unnecessary and the lines 66 and 65 are connected respectively to the cushion gas supply port and the cushion gas discharge port.

### (Compressed air storage apparatus)

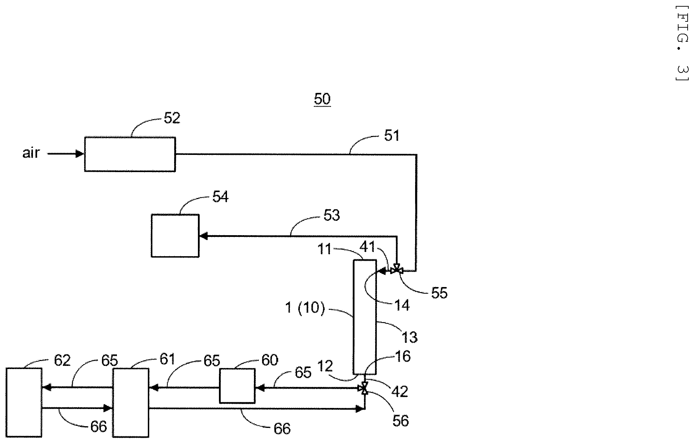

The compressed air storage apparatus 50 (which does not include a power generation device 54) is explained with reference to FIG. 3. Note that while an embodiment of the compressed air storage apparatus 50 shown in FIG. 3 includes a compressor 60, the compressor 60 is not essential and the embodiment does not have to include the compressor 60. Further, if the embodiment does not include the compressor 60, usual cooling is performed rather than compression cooling. The compressed air storage apparatus 50 includes the above compressed air storage container 1 and may use a single compressed air storage container 1 or a plurality of (for example, 50 to 100) compressed air storage containers 1 connected in parallel. The compressed air discharge/supply port 14 on the top part 11 side of the cylindrical container 10 of the compressed air storage container is connected to the compressed air supply line 51 and the compressed air discharge line 53 via the three-way valve 55.

The compressed air supply line 51 is connected to a compressed air supply device 52. The compressed air supply device 52 is a publicly-known device, and examples include a compressor (which is not limited to a standalone compressor, and examples include a combination of a plurality of compressors such as a low-pressure compressor and a high-pressure compressor or the like), a heat accumulator called TES (Thermal Energy Storage) containing a heating medium, for example, a liquid medium such as warm water, heat transfer oil or the like, a solid medium such as ceramics, small stones, bricks or the like, etc., a heat exchanger, and others. The compressed air discharge line 53 is connected to the compressed air energy user 54. The compressed air energy user 54 is, for example, a turbine generator.

The cushion gas discharge port 16 on the bottom part 12 side of the cylindrical container 10 of the compressed air storage container 1 is connected via the switching valve 56 such as a three-way valve or the like to the cushion gas discharge line 65, the cushion gas compressor 60, the cushion gas discharge line 65, a heat exchanger 61 that performs cooling/heating of cushion gas, the cushion gas discharge line 65, and a storage container 62 for liquefied cushion gas after compression cooling in this order. The storage container 62 for liquefied cushion gas after compression cooling is connected to the cushion gas supply line 66, the heat exchanger 61 that performs cooling/heating of cushion gas, the cushion gas supply line 66, the three-way valve 56, and the cushion gas supply port 16 on the bottom part 12 side of the cylindrical container 10 of the compressed air storage container 1.

When used in a compressed air storage apparatus, the compressed air storage container 1 is preferably installed in any form selected from an aboveground installation form, a form in which some are installed underground and the rest are situated on the ground, and a form in which all are installed underground; among these installation forms, the aboveground installation form and the form in which some are installed underground are more preferable. When a large number of (for example, 100) compressed air storage containers 1 are used, the aboveground installation form, the form in which some are installed underground, and as necessary, other installation forms can be mixed.

### (Method of using compressed air storage apparatus)

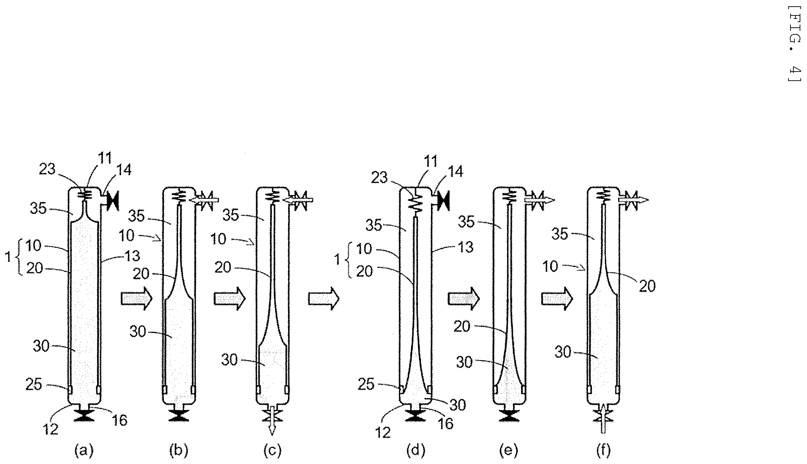

A method of using the compressed air storage apparatus 50 of the present invention is explained with reference to FIGS. 3 and 4. The method of using the compressed air storage apparatus 50 is a method of storing compressed air and a method of using the compressed air using the compressed air storage apparatus 50. Step (operation) 1 is explained with reference to (a) of FIG. 4. In step 1, when compressed air is stored in the compressed air storage container 1, supply of the compressed air to the external space 35 in the compressed air storage container 1 is started from the compressed air supply line 51, the line 41, and the compressed air supply port 14 with the internal space 30 in the compressed air storage container 1 being filled with cushion gas (preferably carbon dioxide gas). In the state of (a) of FIG. 4, the internal space 30 is filled with the maximum amount of cushion gas (carbon dioxide gas), and thus, the spring hanger 23 is in the most contracted state, and the load on the spring hanger 23 is minimum. The load at this time is preferably 20% or less, more preferably 15% or less, and further preferably 10% or less of the own weight of the cylindrical separation film 20.

Step (operation) 2 is explained with reference to (b) and (c) of FIG. 4. In step (operation) 2, first, supply of the compressed air to the external space 35 is started ((b) of FIG. 4). Subsequently, if pressure in the compressed air storage container 1 increases to a predetermined value, the cushion gas is discharged from the internal space 30 through the cushion gas discharge port 16, the line 42, and the cushion gas discharge line 65 while the supply of the compressed air to the external space 35 is continued ((c) of FIG. 4). The discharged cushion gas is stored in the storage container 62 as liquefied cushion gas via the cushion gas compressor 60 and the heat exchanger 61 that performs cooling/heating of cushion gas.

As shown in (b) and (c) of FIG. 4, the capacity of the internal space 30 decreases because the cushion gas is discharged; conversely, the capacity of the external space 35 to which the compressed air is supplied increases.

Step (operation) 3 is explained with reference to (d) of FIG. 4. In step (operation) 3, because the amount of the compressed air that has been supplied to the external space 35 reaches a predetermined amount, the supply of the compressed air to the external space 35 is stopped, and the discharge of the cushion gas from the internal space 30 is stopped. For this purpose, a change in the hanging load applied to the spring hanger 23 is measured to decide the timing of the stop on the basis of the change in the load. In the state of (d) of FIG. 4, the external space 35 is filled with the maximum amount of air, and thus, the spring hanger 23 is in the most extended state, and the hanging load applied to the spring hanger 23 is maximum. The load at this time is preferably 80% or more, more preferably 85% or more, and further preferably 90% or more of the own weight of the cylindrical separation film 20. Further, the timing of the stop can also be decided from the amount of extension or contraction of the spring of the spring hanger 23, or the timing of the stop can also be the time when the amount of the compressed air that has been supplied (the time integral of the flow rate of the compressed air (kg/sec)) or the amount of the cushion gas that has been discharged (the time integral of the flow rate of the cushion gas (kg/sec)) measured by a flowmeter attached to the compressed air supply/discharge line 41 or the cushion gas supply/discharge line 42 reaches a predetermined value. Because excessive supply of the air and excessive discharge of the cushion gas are prevented by thus deciding the timing of the stop, the movement of the cylindrical separation film 20 can be controlled within a predetermined range, and damage due to excessive extension of the cylindrical separation film 20 or the like can be prevented.

Steps (operations) 4 and 5 are explained with reference to (e) and (f) of FIG. 4. When the compressed air is discharged and used, the compressed air is discharged from the compressed air discharge line 53 and supplied to the user 54 (for example, a turbine generator) with the external space 35 of the cylindrical separation film 20 in the compressed air storage container 1 being filled with the compressed air ((d) of FIG. 4). If the compressed air is discharged from the external space 35 of the cylindrical separation film 20 ((e) of FIG. 4) and pressure in the compressed air storage container 1 decreases to a predetermined value, the cushion gas is supplied to the internal space 30 of the cylindrical separation film 20 while the supply of the compressed air to the user 54 is continued ((f) of FIG. 4) to maintain pressure in the compressed air storage container 1 at a predetermined value. The cushion gas supplied to the internal space 30 of the cylindrical separation film 20 at this time is the liquefied cushion gas stored in the storage container 62 and vaporized in the heat exchanger 61 that performs cooling/heating of cushion gas.

Step (operation) 6 is explained with reference to (a) of FIG. 4. Because the amount of the compressed air that has been discharged from the external space 35 in the compressed air storage container 1 to the user 54 reaches a predetermined amount, the supply of the cushion gas to the internal space 30 of the cylindrical separation film 20 is stopped, and the discharge of the compressed air from the external space 35 of the cylindrical separation film 20 is stopped, wherein a change in the hanging load applied to the spring hanger 23 is measured to decide the timing of the stop on the basis of the change in the load. Further, the timing of the stop can also be decided from the amount of extension or contraction of the spring of the spring hanger 23, or the timing of the stop can also be the time when the amount of the compressed air that has been discharged (the time integral of the flow rate of the compressed air (kg/sec)) or the amount of the cushion gas that has been supplied (the time integral of the flow rate of the cushion gas (kg/sec)) measured by a flowmeter attached to the compressed air supply/discharge line 41 or the cushion gas supply/discharge line 42 reaches a predetermined value. Because excessive supply of the cushion gas and excessive discharge of the compressed air are prevented by thus deciding the timing of the stop, the movement of the cylindrical separation film 20 can be controlled within a predetermined range, and damage due to excessive extension of the cylindrical separation film 20 or the like can be prevented. The above steps (operations) 1 to 6 are performed repeatedly. Note that, during actual use, a large number of (for example, one hundred) compressed air storage containers 1 are used, and thus, if the start time of discharge of compressed air from each compressed air storage container 1 is adjusted, the compressed air from the one hundred containers can be continuously supplied to a user (a single turbine generator) or the compressed air can also be continuously supplied to a plurality of turbine generators.

Because the supply and discharge of the cushion gas to/from the internal space 30 and the discharge and supply of the compressed air from/to the external space 35 are performed associated with each other in the method of storing compressed air and the method of using the compressed air of the present invention, the volume of air that can be stored during storage of the compressed air is near the inner capacity of the cylindrical container 10, and almost the whole amount of the stored compressed air can be discharged while pressure is maintained high during use of the compressed air. Accordingly, the amount of compressed air that can be used per capacity of the compressed air storage container can be almost twice as much as the amount in a conventional simple compressed air storage container (a mere container utilizing neither separation film nor cushion gas). This means that the size or the number of compressed air storage containers can be significantly reduced than when using conventional simple compressed air storage containers.

### (Power generation apparatus and power generation method)

The power generation apparatus of the present invention includes the above compressed air storage apparatus 50 and the power generation device 54 such as a turbine generator. The power generation method of the present invention is a method including supplying compressed air stored in the compressed air storage apparatus 50 to the turbine generator of the power generation device 54 and rotating a turbine to generate power. The power generation method of the present invention can continuously repeat the above steps 1 to 6 to continuously generate power, but is preferably performed as in the following embodiment (a), (b) or (c): any power generation method selected from (a) a method including storing compressed air in the daytime by utilizing surplus power from power generation using solar power, and supplying the compressed air stored in the compressed air storage apparatus to the turbine generator in the nighttime to generate power; (b) a method including storing compressed air in the nighttime by utilizing nighttime power, and supplying the compressed air stored in the compressed air storage apparatus to the turbine generator in the daytime to generate power; and (c) a power generation method including storing compressed air when surplus power is available from power generation using renewable energy fluctuating in units of several hours (excluding solar power), and supplying the compressed air stored in the compressed air storage apparatus to the turbine generator when the power generation amount decreases to alleviate the fluctuation in the power generation amount. The power generation using renewable energy fluctuating in units of several hours in the method (c) is, for example, wind power fluctuating depending on the weather or the like. If the above (a), (b) or (c) is performed, the stored compressed air is consumed by performing steps 1 to 6, and thus, steps 1 to 6 are performed for a second time on the next day in (a) or (b) and the next time surplus power is stored in (c).

Storage of compressed air and discharge and use of the compressed air were performed (FIG. 3 and (a) to (f) of FIG. 4) by using the compressed air storage container 1 shown in FIG. 1 (the compressed air storage apparatus 50). As the compressed air storage container 1, a single cylindrical container made of carbon-steel having a diameter of 2 m and a height of 20 m was used for testing. As the cylindrical separation film 20, one with dimensions approximating to inner dimensions of the cylindrical container 10 was used.

In step 1 ((a) of FIG. 4), supply of compressed air to the external space 35 in the compressed air storage container 1 was started from the compressed air supply line 51 and the compressed air supply port 14 with the internal space 30 in the compressed air storage container 10 being filled with cushion gas (carbon dioxide gas).

In step 2 ((b) and (c) of FIG. 4), while the supply of the compressed air to the external space 35 was continued, the cushion gas was discharged from the internal space 30 through the cushion gas discharge port 16 and the cushion gas discharge line 65, and stored in the storage tank 62 after cooled and liquefied. In this step 2, the capacity of the internal space 30 decreased because the cushion gas was discharged, and the capacity of the external space 35 increased because the compressed air was supplied.

In step 3 ((d) of FIG. 4), the supply of the compressed air to the external space 35 was stopped, and the discharge of the cushion gas from the internal space 30 was stopped, wherein a change in the load applied to the cylindrical separation film 20 was measured to decide the timing of the stop (the timing at which the supply of the compressed air was stopped) on the basis of the change in the load. The timing of the stop was the time when the load applied to the spring hanger 23 became 85% to 95% of the own weight of the cylindrical separation film 10.

Further, the capacity of the external space 35 in (d) of FIG. 4 was about 90% of the inner capacity of the cylindrical container 10.

In steps 4 and 5 ((e) and (f) of FIG. 4), when the compressed air was discharged and used, the compressed air was discharged from the compressed air discharge line 53 and supplied to the user (turbine generator) 54 with the external space 35 of the cylindrical separation film 10 in the compressed air storage container 1 being filled with the compressed air. While the discharge of the compressed air from the external space 35 of the cylindrical separation film 20 and the supply thereof to the user 54 were continued, the cushion gas stored in the cushion gas storage container 62 was supplied to the internal space 30 of the cylindrical separation film 20 after heated and vaporized.

In step 6 ((a) of FIG. 4), the supply of the cushion gas to the internal space 30 of the cylindrical separation film 20 was stopped, and the discharge of the compressed air from the external space 35 of the cylindrical separation film 20 and the supply thereof to the user were stopped, wherein a change in the load applied to the cylindrical separation film 20 was measured to decide the timing of the stop (the timing at which the supply of the cushion gas was stopped) on the basis of the change in the load. The load applied to the cylindrical separation film 20 changes in relation to the amount of the air stored in the compressed air storage container 1. In steps 3 and 6, the change in the amount of the air stored in the compressed air storage container 1 can be at least one selected from the amount of discharge of a first gas from the external space 35 or a second gas from the internal space 30 (a time-integrated value of the flow rate thereof), a change in the hanging load applied to the spring hanger 23 with which the cylindrical separation film 20 is hung, and the amount of extension or contraction of the spring of the spring hanger 23. The timing of the stop was the time when the load applied to the spring hanger 23 became 5 to 15% of the own weight of the actual cylindrical separation film 10. Steps 1 to 6 were performed as described above. Because excessive storage of the air and excessive discharge of the cushion gas can be prevented by deciding the timing of the stop as described above, the movement of the cylindrical separation film 20 is never beyond the assumed range. It is considered that this is why the cylindrical separation film 20 maintains its function for a long period even if the steps are repeated multiple times during actual use.

The compressed air storage container of the present invention, if used in a compressed air storage apparatus including the same, can significantly reduce the power generation cost of a power generation method including storing and utilizing compressed air energy. This makes it possible to realize a power generation method utilizing the technology of storing compressed air energy at a realistic cost even in regions such as our country, where underground space capable of storing a large amount of compressed air is scarce.

### Reference sign list

- 1: compressed air storage container
- 10: cylindrical container
- 20: cylindrical separation film
- 23: spring hanger
- 30: internal space
- 35: external space
- 50: compressed air storage apparatus
- 52: compressed air supply device
- 54: power generation device
- 60: cushion gas compressor
- 61: heat exchanger that performs cooling/heating of cushion gas
- 62: storage container for liquefied cushion gas after compression cooling

## Claims

1. A compressed air storage container comprising:
a vertically disposed cylindrical container closed at both ends; and
a cylindrical separation film inside the cylindrical container closed at both ends,
wherein the cylindrical container closed at both ends includes a cylindrical side part, a top part closing an upper end of the cylindrical side part, and a bottom part closing a lower end of the cylindrical side part, includes a supply/discharge port for a first gas on the top part side, and includes a discharge/supply port for a second gas on the bottom part side,
the cylindrical separation film is hung from the top part of the cylindrical container with an opening at an upper end thereof being squeezed and hermetically sealed,
an opening at a lower end of the cylindrical separation film is open against the bottom part, and a circumferential portion of the opening at the lower end is fixed such that it is sealingly attached to the bottom part or the side part close to the bottom part, and
an internal space surrounded by an inner surface of the cylindrical separation film and the bottom part of the cylindrical container is separated from an external space surrounded by the cylindrical container, an outer surface of the cylindrical separation film, and the top part of the cylindrical container with the movement of gas between each other being shut by the cylindrical separation film.

2. The compressed air storage container according to claim 1, wherein a part with which the cylindrical separation film is hung from the top part is a spring hanger, and the container is provided with a device capable of measuring the hanging load of the cylindrical separation film acting on the spring hanger.

3. The compressed air storage container according to claim 1, wherein the cylindrical separation film does not have air permeability, and can maintain by its own weight a state of hanging down like a skirt while allowing the circumferential portion of the opening at the lower end to maintain contact with the bottom part or the side part close to the bottom part of the hollow cylindrical container and is sealingly attached to the cylindrical container by a fixing tool when hung from the top part of the cylindrical container with the opening at the upper end being squeezed and hermetically sealed.

4. The compressed air storage container according to claim 1, wherein the cylindrical separation film has a mass per unit area of 500 g/m² or more, and is made of a material selected from a film made of a synthetic resin, a rubber-coated fabric, and a combination of these.

5. The compressed air storage container according to claim 1, wherein the circumferential portion of the opening at the lower end of the cylindrical separation film is sealingly attached and fixed to the bottom part or the side part close to the bottom part of the hollow cylindrical container using a fixing tool in the form of a continuous or a discontinuous ring.

6. The compressed air storage container according to claim 1, wherein when the compressed air storage container is used in a compressed air storage apparatus, the first gas is compressed air and the second gas is cushion gas or the first gas is cushion gas and the second gas is compressed air.

7. A compressed air storage apparatus comprising the compressed air storage container according to any one of claims 1 to 6,
wherein the compressed air storage container is such that,
when the first gas is compressed air and the second gas is cushion gas, the supply/discharge port on the top part side of the cylindrical container is connected to a compressed air supply/discharge line, and the discharge/supply port on the bottom part side of the cylindrical container is connected to a cushion gas discharge/supply line, a cushion gas compressor, a heat exchanger that performs cooling/heating of cushion gas, and a storage container for liquefied cushion gas after compression cooling, or
when the first gas is cushion gas and the second gas is compressed air, the supply/discharge port on the bottom part side of the cylindrical container is connected to the compressed air supply/discharge line, and the discharge/supply port on the top part side of the cylindrical container is connected to the cushion gas discharge/supply line, the cushion gas compressor, the heat exchanger that performs cooling/heating of cushion gas, and the storage container for liquefied cushion gas after compression cooling.

8. A method of using the compressed air storage apparatus according to claim 7,
the method of using alternately performing a process of supplying compressed air to the external space (or the internal space) of the cylindrical separation film in the compressed air storage container and discharging cushion gas with which the internal space (or the external space) of the cylindrical separation film in the compressed air storage container is filled, and a process of supplying the cushion gas to the internal space (or the external space) and discharging the compressed air with which the external space (or the internal space) is filled,
wherein the method of using comprises the following steps when the external space (or the internal space) is used as a compressed air supply space and the internal space (or the external space) is used as a cushion gas supply space:
step 1 of starting supply of the compressed air from a compressed air supply line to the external space (or the internal space) with the internal space (or the external space) being filled with the cushion gas when storing the compressed air;
step 2 of discharging the cushion gas from the internal space (or the external space) and cooling and storing the discharged cushion gas while continuing the supply of the compressed air to the external space (or the internal space);
step 3 of stopping the supply of the compressed air to the external space (or the internal space) and stopping the discharge of the cushion gas from the internal space (or the internal space), wherein a change in the amount of the air stored in the compressed air storage container is measured to decide the timing of the stop on the basis of the change in the amount of the stored air;
step 4 of discharging the compressed air from a compressed air discharge line and supplying it to a user with the external space (or the internal space) being filled with the compressed air when discharging and using the compressed air;
step 5 of supplying the cushion gas stored in the storage container for liquefied cushion gas to the internal space (or the external space) after heating and vaporizing it while continuing the discharge of the compressed air from the external space (or the internal space) and the supply thereof to the user; and
step 6 of stopping the supply of the cushion gas to the internal space (or the external space) and stopping the discharge of the compressed air from the external space (or the internal space) and the supply thereof to the user, wherein a change in the amount of the air stored in the compressed air storage container is measured to decide the timing of the stop on the basis of the change in the amount of the stored air.

9. The method of using the compressed air storage apparatus according to claim 8, wherein the change in the amount of the air stored in the compressed air storage container in the steps 3 and 6 is at least one selected from the amount of discharge of the first gas from the external space or the second gas from the internal space (a time-integrated value of the flow rate thereof), a change in the hanging load applied to the spring hanger with which the cylindrical separation film is hung, and the amount of extension or contraction of a spring of the spring hanger.

10. A power generation apparatus comprising the compressed air storage apparatus according to claim 7 and a turbine generator.

11. A power generation method by a power generation apparatus including the compressed air storage apparatus according to claim 7 and a turbine generator, comprising:
supplying compressed air stored in the compressed air storage apparatus to the turbine generator to generate power.

12. A power generation method by a power generation apparatus including the compressed air storage apparatus according to claim 7 and a turbine generator,
wherein the method is any power generation method selected from:
(a) a method including storing compressed air in the daytime by utilizing surplus power from power generation using solar power, and supplying the compressed air stored in the compressed air storage apparatus to the turbine generator in the nighttime to generate power;
(b) a method including storing compressed air in the nighttime by utilizing nighttime power, and supplying the compressed air stored in the compressed air storage apparatus to the turbine generator in the daytime to generate power; and
(c) a power generation method including storing compressed air when surplus power is available from power generation using renewable energy fluctuating in units of several hours (excluding solar power), and supplying the compressed air stored in the compressed air storage apparatus to the turbine generator when the power generation amount decreases to alleviate the fluctuation in the power generation amount.
